# EUROPEAN PATENT APPLICATION

(11) **EP 4 311 005 A1**
(43) Date of publication of application: **24.01.2024**
(21) Application number: 22771608.1
(22) Date of filing: 09.02.2022
(51) Int. Cl.: H01M 50/342, H01M 50/152

(54) **SECONDARY BATTERY**

(30) Priority: 18.03.2021 KR 20210035286
(71) Applicant: Samsung SDI Co., Ltd., Yongin-si, Gyeonggi-do 17084 (KR)
(72) Inventor: PARK, Jong Jun, Yongin-si, Gyeonggi-do 17084 (KR); KIM, Dae Kyu, Yongin-si, Gyeonggi-do 17084 (KR); KIM, Shin Jung, Yongin-si, Gyeonggi-do 17084 (KR); KO, Sung Gwi, Yongin-si, Gyeonggi-do 17084 (KR)
(74) Representative: Marks & Clerk LLP
(86) International application number: PCT/KR2022/001943
(87) International publication number: WO 2022/196942

(57) **Abstract**

The present disclosure provides a secondary battery capable of increasing an operation time till a breakdown of a safety vent at a high temperature environment. As an example, disclosed is a secondary battery comprising: a can having a space therein; an electrode assembly accommodated in the space of the can; and a cap assembly for sealing the electrode assembly by blocking the can, wherein the cap assembly comprises a cap-up, a cap-down under the cap-up, and a safety vent between the cap-up and the cap-down, wherein the safety vent comprises a support protrusion formed on a contact surface coupled to the cap-up.

## Description

### TECHNICAL FIELD

An embodiment of the present disclosure relates to a secondary battery having an improved current collecting structure.

### BACKGROUND ART

In general, a cylindrical secondary battery includes a cylindrical electrode assembly, a cylindrical can accommodating the electrode assembly and an electrolyte, and a cap assembly coupled to an upper opening of a can to seal the can and to allow current generated from the electrode assembly to flow to an external device.

The cap assembly has a safety vent for discharging internal gas to the outside when the internal pressure of the can is greater than a critical value. In general, since the internal pressure of the can is proportional to temperatures, the safety vent may unexpectedly open relatively quickly when the secondary battery is placed in a high-temperature environment.

### DESCRIPTION OF EMBODIMENTS

### TECHNICAL PROBLEM

The present disclosure relates to a secondary battery capable of increasing an operation time till a breakdown of a safety vent at a high temperature environment.

### SOLUTION TO PROBLEM

An exemplary secondary battery according to the present disclosure may include: a can having a space therein; an electrode assembly accommodated in the space of the can; and a cap assembly for sealing the electrode assembly by blocking the can, wherein the cap assembly comprises a cap-up, a cap-down under the cap-up, and a safety vent between the cap-up and the cap-down, wherein the safety vent comprises a support protrusion formed on a contact surface coupled to the cap-up.

In some examples, the support protrusion may be formed inside the edge where the safety vent is coupled to the cap-up.

In some examples, the support protrusion may be formed by contacting the lower surface of the cap-up.

In some examples, the cap-up may further include a cap-up inclined portion protruding toward an inner upper end from an edge in contact with the safety vent.

In some examples, the support protrusion may be in contact with the lower surface of the cap-up inclined portion.

In some examples, the support protrusion protrudes from the safety vent according to the shape of the cap-up inclined portion.

In some examples, the safety vent may include a vent groove formed in the inner region of the support protrusion.

In some examples, the safety vent may be coupled to the cap-down through a contact portion formed at the center thereof.

In some examples, the safety vent may be spaced from the cap down from the support protrusion to the contact portion.

In some examples, the support protrusion may be fixed to the cap-up and supports the same during the upward motion of the safety vent.

### ADVANTAGEOUS EFFECTS OF DISCLOSURE

In an exemplary secondary battery according to the present disclosure, a support protrusion formed on a safety vent is coupled to the lower surface of a cap-up and serves as a support for a bending operation during the operation of the safety vent, thereby allowing the safety vent to be maintained at the operating state without a breakdown even at higher pressures than before.

### BRIEF DESCRIPTION OF DRAWINGS

FIG. 1A is a perspective view illustrating an exemplary secondary battery according to the present disclosure.
FIG. 1B is a cross-sectional view along line A-A of FIG. 1A.
FIG. 2 is a cross-sectional view showing a cap assembly in an exemplary secondary battery according to the present disclosure.
FIG. 3 is an enlarged view of part B of FIG. 2.
FIGS. 4 to 6 are cross-sectional views illustrating the operation of a cap assembly in an exemplary secondary battery according to the present disclosure.

### BEST MODE

Examples of the present disclosure are provided to more completely explain the present disclosure to those skilled in the art, and the following examples may be modified in various other forms. The present disclosure, however, may be embodied in many different forms and should not be construed as being limited to the example (or exemplary) embodiments set forth herein. Rather, these example embodiments are provided so that this invention will be thorough and complete and will convey the aspects and features of the present disclosure to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

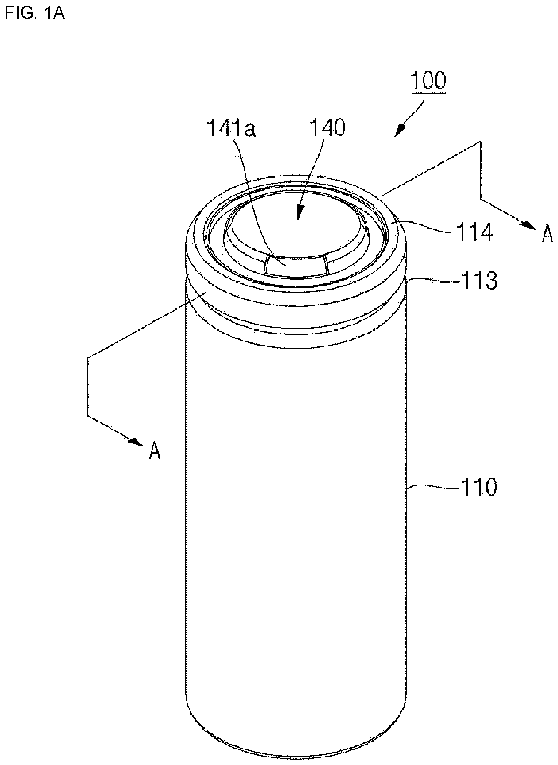

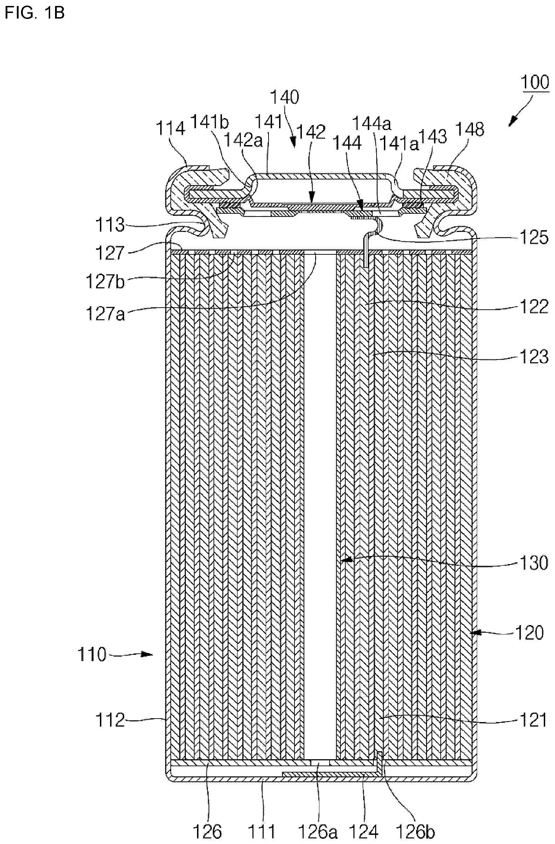

FIG. 1A is a perspective view illustrating an exemplary secondary battery according to the present disclosure. FIG. 1B is a cross-sectional view along line A-A of FIG. 1A.

As shown in FIGS. 1A and 1B, an exemplary secondary battery 100 according to the present disclosure may include a cylindrical can 110, an electrode assembly 120, and a cap assembly 140. In some examples, the secondary battery 100 may further include a center pin 130 coupled to the electrode assembly 120.

The can 110 may include a circular bottom portion 111 and a cylindrical side portion 112 extending a predetermined length upward from the bottom portion 111. During the manufacturing process of secondary battery, the top portion of the can 110 is open. Therefore, during the assembling process of secondary battery, the electrode assembly 120 may be inserted into the can 110 together with an electrolyte. In some examples, the can 110 may include steel, a steel alloy, aluminum, an aluminum alloy, or an equivalent thereof. In some examples, the can 110 may include a beading part 113 recessed into the lower part around the cap assembly 140 so that the electrode assembly 120 and the cap assembly 140 do not escape to the outside, and a crimping part 114 bent to the inside at the top portion thereof.

The electrode assembly 120 may be accommodated inside the can 110. The electrode assembly 120 includes a negative electrode plate 121 coated with a negative electrode active material (e.g., graphite, carbon, etc.), a positive electrode plate coated with a positive electrode active material (e.g., transition metal oxide ((LiCoO₂, LiNiO₂, LiMn₂O₄, etc.)) 122), and a separator 123 positioned between the negative electrode plate 121 and the positive electrode plate 122 to prevent a short circuit and to allow only the movement of lithium ions. In some examples, the negative electrode plate 121, the positive electrode plate 122, and the separator 123 may be wound in a substantially cylindrical shape. In some examples, the negative electrode plate 121 may include copper (Cu) or nickel (Ni) foil, the positive electrode plate 122 may include aluminum (Al) foil, and the separator 123 may include polyethylene (PE) or polypropylene (PP), respectively. In some examples, a negative electrode tab 124 protruding and extending a certain length downward may be welded to the negative electrode plate 121 and a positive electrode tab 125 protruding a certain length upward may be welded to the positive electrode plate 122, but the opposite is also possible. In some examples, the negative electrode tab 124 may include a copper or nickel material, and the positive electrode tab 125 may include an aluminum material.

In some examples, the negative electrode tab 124 of the electrode assembly 120 may be welded to the bottom portion 111 of the can 110. Accordingly, the can 110 may operate as a negative electrode. Conversely, the positive electrode tab 125 may be welded to the bottom portion 111 of the can 110, and in this case, the can 110 may operate as a positive electrode.

In some examples, a first insulating plate 126 coupled to the can 110 and having a first hole 126a at the center and a second hole 126b at the outside may be interposed between the electrode assembly 120 and the bottom portion 111. The first insulating plate 126 may prevent the electrode assembly 120 from electrically contacting the bottom portion 111 of the can 110. In some examples, the first insulating plate 126 may prevent the positive electrode plate 122 of the electrode assembly 120 from electrically contacting the bottom portion 111. In some examples, the first hole 126a is provided in the first insulating plate 126, and thus, when a large amount of gas is generated due to an abnormality of the secondary battery, gas may pass through the first hole 126a and move rapidly upward through the center pin 130. In addition, the second hole 126b is formed in the first insulating plate 126, so that the negative electrode tab 124 passes through the second hole 126 to be welded to the bottom portion 111.

In some examples, a second insulating plate 127 coupled to the can 110 and having a first hole 127a at the center and a plurality of second holes 127b at the outside may be interposed between the electrode assembly 120 and the cap assembly 140. The second insulating plate 127 may prevent the electrode assembly 120 from electrically contacting the cap assembly 140. In some examples, the second insulating plate 127 may prevent the negative electrode plate 121 of the electrode assembly 120 from electrically contacting the cap assembly 140. In some examples, when a large amount of gas is generated due to an abnormality of the secondary battery, the first hole 127a allows gas to rapidly move to the cap assembly 140, and the second hole 127b allows the positive electrode tab 125 to pass therethrough to then be welded to the cap assembly 140. In addition, the remaining second holes 127b allow an electrolyte to quickly flow into the electrode assembly 120 during an electrolyte injection process.

In some examples, the first holes 126a and 127a of the first and second insulating plates 126 and 127 are formed to have smaller diameters than the diameter of the center pin 130, and thus the center pin 130 may be prevented from electrically contacting the bottom portion 111 of the can 110 or the cap assembly 140 due to an external impact.

The center pin 130 is shaped of a hollow circular pipe and may be coupled to an approximate center of the electrode assembly 120. In some examples, the center pin 130 may include steel, a steel alloy, aluminum, an aluminum alloy, or polybutylene terephthalate. The center pin 130 serves to suppress deformation of the electrode assembly 120 during charging and discharging of battery and serves as a passage for the gas generated inside the secondary battery. In some cases, the center pin 130 may be omitted.

The cap assembly 140 may include a cap-up 141 having a plurality of through holes 141a, a safety vent 142 positioned under the cap-up 141, a connection ring 143 positioned under the safety vent 142, and a cap-down 144 positioned under the safety vent 142 and the connection ring 143, having a plurality of through holes 144a, and electrically connected to the positive electrode tab 125. In some examples, the cap assembly 140 may further include an insulating gasket 148 that insulates the cap-up 141, the safety vent 143, and the cap-down 144 from the side portion 111 of the can 110.

In some examples, the insulating gasket 148 may be substantially compressed between the beading part 113 formed on the side portion 111 of the can 110, and the crimping part 114. In some examples, the through holes 141a of the cap-up 141 and the through holes 144a of the cap-down 144 can discharge internal gas to the outside when abnormal internal pressure is generated inside the can 110. In some examples, the internal gas may invert the safety vent 143 upward through the through holes 144a of the cap-down 144, so that the safety vent 143 is electrically separated from the cap-down 144, and then the safety vent 144 is broken down (opened), the internal gas may be released to the outside through the through holes 141a of the cap-up 141.

In some examples, electrolyte (not shown) may be injected into the can 110, which allows lithium ions generated by electrochemical reactions in the negative plate 121 and the positive plate 122 inside the battery to move during charging and discharging. The electrolyte may include a non-aqueous organic electrolyte solution that is a mixture of a lithium salt and high-purity organic solvent. In some examples, the electrolyte solution may include a non-aqueous organic electrolyte solution that is a mixture of a lithium salt and high-purity organic solvents.

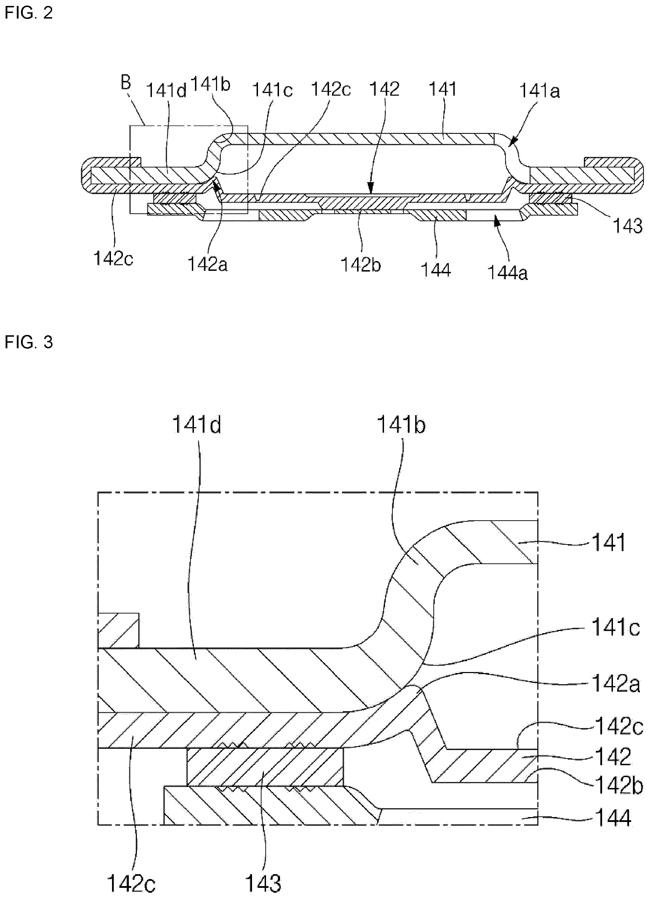

FIG. 2 is a cross-sectional view showing a cap assembly in an exemplary secondary battery according to the present disclosure. FIG. 3 is an enlarged view of part B of FIG. 2.

As shown in FIGS. 2 and 3, the cap assembly 140 may include a cap-up 141, a safety vent 142 disposed under the cap-up 141, a connection ring 143 disposed under the safety vent 142, and a cap-down 144 disposed under the connection ring 143.

In some examples, the cap-up 141 contacts the safety vent 142 at the coupling portion 141d, which is an edge, but may have a shape protruding upward from the inside. In addition, the cap-up 141 may include a cap-up inclined portion 141b having a plurality of through holes 141a. The cap-up inclined portion 141b may be bent upward from the coupling portion 141d of the cap-up 141 toward the inside. A through hole 141a may be provided in a portion of the cap-up inclined portion 141b to provide a path through which internal gases escape when the safety vent 142 is broken down.

The safety vent 142 may contact the cap-up 141 at a coupling portion 142c, which is an edge. In addition, the safety vent 142 may include a support protrusion 142a protruding upward toward the cap-up inclined portion 141b of the cap-up 141, and may maintain a contact state with the cap-down 144 thereunder through a contact portion 142b positioned inside the support protrusion 142a. The support protrusion 142a protrudes from the edge of the cap-up 141 to contact and support a part of the lower surface 141c of the cap-up inclined portion 141b. Accordingly, the cap-up inclined portion 141b and the lower surface 141c may remain in contact with the safety vent 142 for a longer period of time by the support protrusion 142a.

For example, when the gas inside the can 110 is generated and moved upward, the safety vent 142 may start to operate, a deformation in which the safety vent 142 is bent upward with respect to the contact portion 142b in the center may start, and the contact portion 142b may be physically and electrically separated from the cap-down 144. In addition, as the internal gas of the can 110 is generated and the pressure increases, the contact portion 142b of the safety vent 142 is gradually upwardly deformed, and when the pressure is higher than a reference pressure, the safety vent 142 may be broken down on the basis of a vent groove 142c. Here, in a state in which the support protrusion 142a is in contact with the lower surface 141c of the cap-up inclined portion 141b, the contact portion 142b positioned inside is upwardly deformed, and thus a contact between the support protrusion 142a and the lower surface 141c of the cap-up inclined portion 141b may be maintained for a longer period of time even if the deformation toward the upper portion of the contact portion 142b starts. Therefore, the time from when the contact portion 142b is separated from the cap down 144 by the operation of the safety vent 142 to the time when breakdown occurs in the vent groove 142c of the safety vent 142 may be extended compared to the conventional case.

In other words, even if the internal pressure gradually increases due to the gas generated inside the can 111, the time from the operation of the safety vent 142 to the breakdown thereof is extended, and thus the time during which the secondary battery can withstand the internal pressure may be extended. Therefore, the operation reliability of the secondary battery can be improved.

The connection ring 143 may be interposed between the safety vent 142 and the cap-down 144. In some examples, the cap-up 141, the safety vent 142, and the cap-down 144 may include a metal material (e.g., aluminum, copper or nickel), while the connection ring 143 may include an insulating material (e.g., polypropylene or polyethylene).

The cap-down 144 may be coupled to the safety vent 142 through the connection ring 143 at the edge. In addition, the cap-down 144 may be basically separated from the lower surface of the safety vent 142. In some examples, a vertical separation distance between the lower surface of the safety vent 142 and the cap-down 144 may be about 0.20 mm to about 30 mm. Meanwhile, the cap-down 144 may be coupled to the contact portion 142b of the safety vent 142. For example, the cap-down 144 may be maintained at a state of being coupled to the contact portion 142b of the safety vent 142 by, for example, welding.

In addition, the has at least one through hole 144a on an inner portion, and the gas generated inside the can 111 can reach the safety vent 142 through the through hole 144a. In this way, the operation and breakdown of the safety vent 142 may be performed.

Hereinafter, an operation of the cap assembly 140 of an exemplary secondary battery according to the present disclosure will be described in detail.

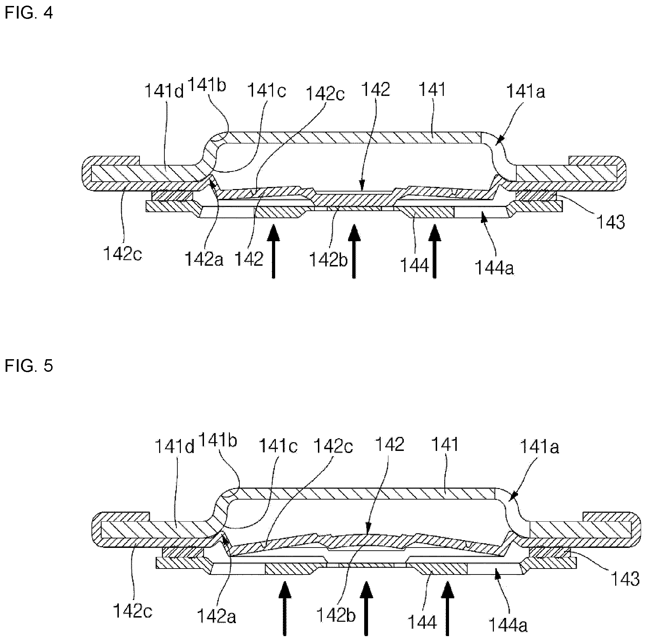

FIGS. 4 to 6 are cross-sectional views illustrating the operation of a cap assembly in an exemplary secondary battery according to the present disclosure.

Referring to FIG. 4, as indicated by arrows, pressure may be applied upward due to the generation of gas inside the can 110. In addition, as the gas moves along the through hole 144a of the cap-down 144, the pressure may be applied to the lower surface of the safety vent 142. In addition, as described above, the contact portion 142b of the safety vent 142 is coupled to the cap-down 144, and thus the safety vent 142 may not be deformed at a pressure below the reference pressure.

Referring to FIG. 5, when the pressure inside the can 111 due to the generation of gas exceeds the reference pressure, the safety vent 142 may start to deform upward relative to the contact portion 142b. In addition, as the force of deformation increases, the contact portion 142b may be separated from the cap-down 144.

Meanwhile, in this case, even if the safety vent 142 is deformed, the support protrusion 142a may be maintained at a state of being in contact with the lower surface 141c of the cap-up inclined portion 141b. In addition, the lower surface 141c of the cap-up inclined portion 141b is formed to face upward in a curved shape according to the shape of the cap-up inclined portion 141b. In addition, the support protrusion 142a may be coupled in a more elevated state toward the inside of the cap-up inclined portion 141b along the lower surface 141c of the cap-up inclined portion 141b.

Therefore, when the safety vent 142 operates and a deformation operation is performed, the support protrusion 142a supports the deformation operation at the edge of the safety vent 142. Accordingly, the safety vent 142 is capable of being bent more toward the inner upper side than in the deformation in a flat state in which the support protrusion 142a is not provided. As a result, even after the safety vent 142 is operated, the safety vent 142 can withstand the pressure due to a larger amount of gas until it reaches breakdown.

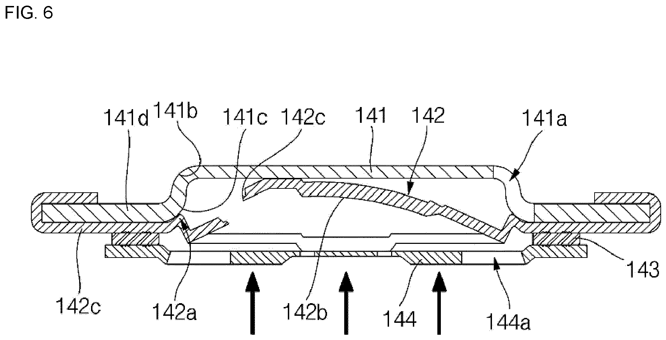

Referring to FIG. 6, when the pressure inside the can 111 further increases due to gas generation, the safety vent 142 may be broken down in the vent groove 142c. Here, the safety vent 142 is opened at the vent groove 142c as a boundary, and internal gas can escape to the outside of the cap-up 141 through an open area. Therefore, due to the breakdown operation of the safety vent 142, the internal pressure of the can 111 does not rise above the reference pressure, the secondary battery 100 may be prevented from exploding.

What has been described above is only one embodiment for carrying out the present disclosure, and the present disclosure is not limited to the above-described embodiment. However, the technical spirit of the present disclosure lies in that anyone skilled in the art could make various changes, as claimed in the claims below, without departing from the gist of the present disclosure.

## Claims

1. A secondary battery comprising:
a can having a space therein;
an electrode assembly accommodated in the space of the can; and
a cap assembly for sealing the electrode assembly by blocking the can,
wherein the cap assembly comprises a cap-up, a cap-down under the cap-up, and a safety vent between the cap-up and the cap-down, wherein the safety vent comprises a support protrusion formed on a contact surface coupled to the cap-up.

2. The secondary battery of claim 1, wherein the support protrusion is formed inside the edge where the safety vent is coupled to the cap-up.

3. The secondary battery of claim 1, wherein the support protrusion is formed by contacting the lower surface of the cap-up.

4. The secondary battery of claim 1, wherein the cap-up further comprises a cap-up inclined portion protruding toward an inner upper end from an edge in contact with the safety vent.

5. The secondary battery of claim 4, wherein the support protrusion is in contact with the lower surface of the cap-up inclined portion.

6. The secondary battery of claim 5, wherein the support protrusion protrudes from the safety vent according to the shape of the cap-up inclined portion.

7. The secondary battery of claim 1, wherein the safety vent includes a vent groove formed in the inner region of the support protrusion.

8. The secondary battery of claim 1, wherein the safety vent is coupled to the cap-down through a contact portion formed at the center thereof.

9. The secondary battery of claim 8, wherein the safety vent is spaced from the cap down from the support protrusion to the contact portion.

10. The secondary battery of claim 1, wherein the support protrusion is fixed to the cap-up and supports the same during the upward motion of the safety vent.
